(19) Europäisches Patentamt
European Patent Office
Office européen des brevets

(11) EP 2 016 117 B1

# (12) EUROPÄISCHE PATENTSCHRIFT

(45) Veröffentlichungstag und Bekanntmachung des Hinweises auf die Patenterteilung:
**06.04.2011 Patentblatt 2011/14**

(21) Anmeldenummer: **07724425.9**

(22) Anmeldetag: **20.04.2007**

(51) Int Cl.:
***C08J 3/09*** *(2006.01)* ***C10M 171/00*** *(2006.01)*

(86) Internationale Anmeldenummer:
**PCT/EP2007/003489**

(87) Internationale Veröffentlichungsnummer:
**WO 2007/121942 (01.11.2007 Gazette 2007/44)**

## (54) SEDIMENTATIONSSTABILE DISPERSION, VERFAHREN ZUR HERSTELLUNG SOWIE DEREN VERWENDUNG

STABLE SEDIMENT DISPERSION, PROCESS FOR MANUFACTURE AND USES

DISPERSION STABLE A LA SÉDIMENTATION, PROCÉDÉ DE PRODUCTION ET SON UTILISATION

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **21.04.2006 DE 102006018530**

(43) Veröffentlichungstag der Anmeldung:
**21.01.2009 Patentblatt 2009/04**

(73) Patentinhaber: **Fraunhofer-Gesellschaft zur Förderung der angewandten Forschung e.V.**
**80686 München (DE)**

(72) Erfinder:
- **UEBE, Jochen**
  **97072 Würzburg (DE)**
- **SIEBER, Erich**
  **63834 Sulzbach (DE)**
- **GAUL, Silvia**
  **97753 Stetten (DE)**
- **BÖSE, Holger**
  **97080 Würzburg (DE)**

(74) Vertreter: **Pfenning, Meinig & Partner GbR**
**Patent- und Rechtsanwälte**
**Theresienhöhe 13**
**80339 München (DE)**

(56) Entgegenhaltungen:
**EP-A- 0 521 638 EP-A1- 0 457 597**
**WO-A-93/06199**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 016 117 B1

## Beschreibung

Die vorliegende Erfindung betrifft eine sedimentationsstabile Dispersion, die v.A. als elektrorheologische (ERF) und/oder magnetorheologische Flüssigkeit (MRF) verwendet werden kann, ein Verfahren zu deren Herstellung sowie deren Verwendung.

ERF sowie MRF sind Flüssigkeiten, die unter Einwirkung eines äußeren elektrischen bzw. magnetischen Feldes ihr Fließverhalten ändern. Bei ERF und MRF handelt es sich in der Regel um nicht-kolloidale Dispersionen aus in einem elektrischen bzw. magnetischen Feld polarisierbaren Teilchen in einer Trägerflüssigkeit, die gegebenenfalls Zusatzstoffe beinhaltet. Als solche Zusatzstoffe können Stabilisatoren zugesetzt werden, um Sedimentation der nicht-kolloidalen Partikel der Dispersion zu vermeiden oder zu minimieren.

Je nach Dichteunterschied zwischen den Partikeln und der Trägerflüssigkeit kommt es bei bisherigen ERF und/oder MRF zur Sedimentation der Partikel. Es bildet sich ein Bodensatz, der eine hohe Festigkeit aufweisen kann. Bei hoher Festigkeit kann das Redispergieren der Partikel sehr erschwert sein. Eine starke Sedimentation und ein fester Bodensatz beispielsweise können die Verwendungsdauer einer ERF und/oder MRF stark verringern. Bei der praktischen Nutzung sollte die disperse Phase möglichst nicht sedimentieren, sich aber in jedem Fall gut redispergieren lassen.

Als Stabilisatoren für ERF, die dem Stand der Technik entsprechen, werden bevorzugt Reaktionsprodukte aus OH-funktionellen Polydimethoxysiloxanen mit Aminopropyltriethoxysilan und/oder das Umsetzungsprodukt aus Octamethylcyclotetrasiloxan mit N-(β-Aminoethyl)-γ-aminopropylmethyldiethoxysilan eingesetzt (EP 0 824 128 B1). Es handelt sich dabei um Reaktivstabilisatoren, die Aminogruppen als funktionelle Gruppen aufweisen, die eine chemische Verknüpfung mit der Oberfläche des Präpolymers ermöglichen. Die Struktur wird in EP 0 824 128 B1 beschrieben.

Die Teilchengröße und die Teilchengrößeverteilung beeinflussen die Absetzstabilität von Dispersionen. Der mittlere Teilchendurchmesser des dispergierten Präpolymers wird auf einen Wert zwischen 0,1 und 30 μm, bevorzugt zwischen 0,5 und 25 μm und besonders bevorzugt zwischen 1 und 20 μm eingestellt. Die relative Breite der Teilchengrößeverteilung U90 wird vorzugsweise auf einen Wert von 1,7 eingestellt. Der Betrag der Teilchengrößeverteilung U90 wird nach der folgenden Formel berechnet,

$$U_{90} = \frac{d_{90} - d_{10}}{d_{50}}$$

wobei $d_{90}$, $d_{50}$ und $d_{10}$ folgende Bedeutung haben:

- $-d_{90}$ [μm]: 90% der Gesamtzahl aller Teilchen haben ei- ne Teilchengröße, die kleiner oder gleich diesem Wert ist.
- $-d_{50}$ [μm]: 50% der Gesamtzahl aller Teilchen haben ei- ne Teilchengröße, die kleiner oder gleich diesem Wert ist.
- $-d_{10}$ [μm]: 10% der Gesamtzahl aller Teilchen haben ei- ne Teilchengröße, die kleiner oder gleich diesem Wert ist.

Um Sedimentation zu vermeiden, sollte die nichtwässrige Trägerflüssigkeit außerdem vorzugsweise eine Dichte aufweisen, die ungefähr der Dichte der ausgehärteten emulgierten Teilchen entspricht. So lassen sich z.B. durch die Verwendung von halogenhaltigen Trägerflüssigkeiten Dispersionen herstellen, die trotz geringer Basisviskositäten auch über Wochen hinaus keine Sedimentation aufweisen. Besonders sind zur Herstellung sedimentationsstabiler Dispersionen Trägerflüssigkeiten der allgemeinen Struktur entsprechend EP 0824 128 B1 [0019] geeignet. Allerdings steigt die Viskosität der derzeit handelsüblichen fluorhaltigen Siloxane stark mit dem Polymerisationsgrad des fluorhaltigen Monomers an.

Als alternative Möglichkeit zur Darstellung sedimentationsstabiler ERF wird in EP 0 284 268 B1 eine Suspension aus Lithiumresorcinol-Formaldehyd-Harz-Teilchen, die in Fluorsiliconöl suspendiert sind, beschrieben. Zum Ausgleich des Dichteunterschieds der Teilchen und der Trägerflüssigkeit ist noch Pölychlortrifluorethylen (CTFE) zugemischt. Diese ERF enthält allerdings flüchtige Bestandteile, insbesondere Polychlortrifluorethylen (CTFE), so dass mit der Zeit die Basisviskosität der ERF ansteigt und die Teilchen immer stärker sedimentieren.

Des Weiteren wird in EP 0 523 300 B1 sowie dem Material Safety Data Sheet Nr. TSI 5201-01-00 die Darstellung einer ERF, bestehend aus sulfonierten, in Siliconöl suspendierten Polystyrol-co-divinylbenzol-Natriumsalz-Teilchen beschrieben. Zum Ausgleich des Dichteunterschieds der Teilchen und der Trägerflüssigkeit ist noch Polychlortrifluorethylen (CTFE) zugemischt. Diese ERF enthält allerdings flüchtige Bestandteile, insbesondere Polychlortrifluorethylen (CTFE), so dass mit der Zeit die Basisviskosität der ERF ansteigt und die Teilchen immer stärker sedimentieren.

Aufgabe der vorliegenden Erfindung ist es, trotz eines großen Dichteunterschieds zwischen verwendeter homogener Phase und dispergierten Partikeln die Herstellung einer sedimentationsstabilen Dispersion, die insbesondere eine Suspension und/oder Emulsion, im Speziellen eine elektrorheologische und/oder magnetorheologische Flüssigkeit

ist, mittels eines geeigneten Stabilisators zu gewährleisten.

Diese Aufgabe wird durch die Dispersion mit den Merkmalen des Patentanspruchs 1 gelöst. Ebenso wird mit dem Patentanspruch 21 ein erfindungsgemäßes Verfahren zur Herstellung einer derartigen Dispersion bereitgestellt. Vorteilhafte Weiterbildungen werden je in den abhängigen Ansprüchen beschrieben. Des Weiteren geben die Patentansprüche 35 bis 28 Verwendungsmöglichkeiten derartig hergestellter Dispersionen an.

Erfindungsgemäß wird eine sedimentationsstabile Dispersion, enthaltend

a) mindestens eine Trägerflüssigkeit, die bevorzugt elektrisch nicht leitend ist,
b) mindestens eine Sorte darin dispergierte Partikel und/oder Tröpfchen, die die dispergierte Phase bilden, sowie
c) mindestens einen Stabilisator bereitgestellt, wobei der mindestens eine Stabilisator zumindest teilweise fluoriert ist.

Die erfindungsgemäßen Dispersionen, bevorzugt Suspensionen und/oder Emulsionen, im Speziellen elektrorheologische und/oder magnetorheologische Flüssigkeiten, zeichnen sich dadurch aus, dass sie einen zumindest teilweise fluorierten Stabilisator enthalten. Überraschenderweise zeigte sich, dass das Einführen von fluorierten Seitenketten im Stabilisator eine stärkere hydrophobe Wirkung des Stabilisators bewirkt. Dabei stellte sich heraus, dass z.B. bei niederviskosen Siliconölen mit einer Viskosität kleiner 10 cSt trotz eines großen Dichteunterschieds zu beispielsweise dispergierten salzdotierten PUR-Partikeln nur eine geringe Sedimentation auftritt. Stattdessen bildet sich bei Stillstand eine lockere Struktur zwischen Siliconöl und Partikeln aus, die nur einen geringen Anteil überstehenden klaren Öls aufweist. Diese Struktur lässt sich außerdem sehr leicht mit dem überstehenden Siliconöl redispergieren. Bei Systemen, wie sie aus dem Stand der Technik bekannt sind, bildet sich, wenn die Partikel einmal sedimentiert sind, ein harter Bodensatz aus, der sich kaum mehr redispergieren lässt. Die Basisviskosität der ERF aus salzdotierten PUR-Partikeln sowie dem oben beschriebenen Stabilisator und Siliconölen niedriger Viskosität als Trägerflüssigkeit ist bei hohen Scherraten gegenüber EP 0 824 128 B1 nahezu unverändert. Die erfindungsgemäße Dispersion, beispielsweise aus salzdotierten PUR-Partikeln, Stabilisator und Siliconöl als Trägeflüssigkeit weist damit ein im Vergleich zu bisherigen ERF deutlich verbessertes Eigenschaftsprofil auf.

Eine vorteilhafte Ausführungsform sieht vor, dass der Stabilisator ein Reaktivstabilisator ist. Reaktivstabilisatoren besitzen bevorzugt funktionelle Gruppen, die eine chemische Verknüpfung mit der Oberfläche des zu stabilisierenden Partikels, im Besondern eines Präpolymers und/oder Polymers ermöglichen. Dabei richtet sich die Art der funktionellen Gruppen nach der Härtungsreaktion. Insbesondere sind die funktionellen Gruppen dabei ausgewählt aus der Gruppe bestehend aus Amino-, Alkohol, Carbonyl-, Aldehyd-, Halbacetal-, Acetal-, Epoxid-, Carbonsäure-, Carbonsäurechlorid-, Carbonsäureanhydrid-, Carbonsäureamid-, Imidazolyl-, Vinyl-, Ethinyl-, Halogen-, $\alpha,\beta$-ungesättigten Keto-, (Meth)Acryl- und/oder Thiolgruppen oder davon abgeleiteten Gruppen.

Der Stabilisator kann dabei direkt oder indirekt mit dem Präpolymer verknüpft werden. Erfindungsgemäß wird unter einer direkten Verknüpfung eine unmittelbare chemische Verbindung zwischen der Oberfläche des Präpolymers und/oder Polymers und des Stabilisators verstanden. Eine indirekte Verknüpfung stellt erfindungsgemäß eine Verbindung zwischen der Oberfläche des Präpolymers und dem Stabilisator dar, bei der zusätzlich noch mindestens ein weiteres Molekül zwischen der Oberfläche des Präpolymers und dem Stabilisator gebunden ist. Vorzugsweise wird dabei erfindungsgemäß ein organisches Isocyanat verwendet.

Im Speziellen ist der Stabilisator ein zumindest teilweise fluoriertes organofunktionelles Polysiloxan der allgemeinen Formel I

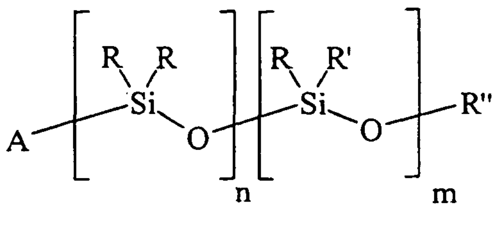

Formel I

mit n und m unabhängig voneinander von 0 bis 77, R = $C_1$-$C_{18}$-Alkyl und/oder Phenyl, vorzugsweise Methyl, R' = $(CH_2)_o$-$C_pF_{2p+1}$ mit o = 2-18 und p = 1-10, R" = $C_1$-$C_{18}$-Alkyl und/oder Phenyl und/oder H, A = gleiche oder verschiedene SiC-gebundene Reste ausgewählt aus der Gruppe bestehend aus

$-CH_2CH_2NH_2$

$-CH_2CH_2CH_2NH_2$

$-(CH_2)_5NH_2$

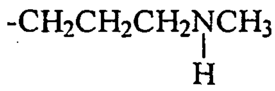

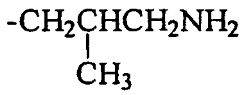

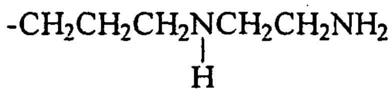

$-(CH_2)_3(NHCH_2CH_2)_2NH_2$

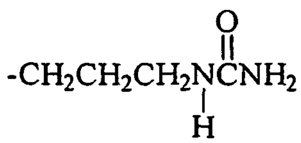

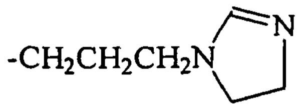

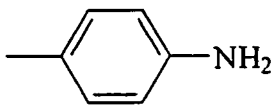

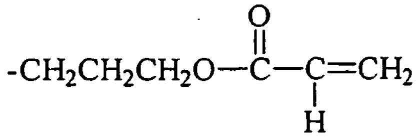

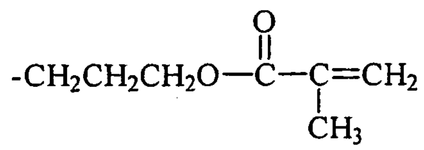

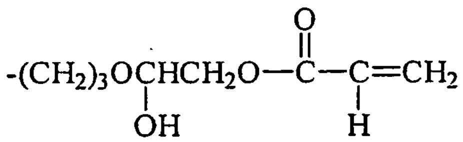

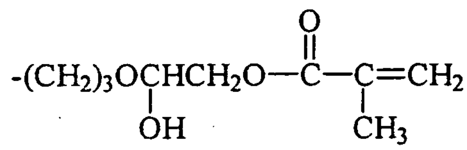

$-CH=CH_2$

$-CH_2CH_2SH$

und/oder Resten mit einer terminalen OH-Gruppe, einer Vinyl- oder Ethinyl-Gruppe, einer Halogen-Gruppe, einer Aldehyd-, Halbacetal- oder Acetal-Gruppe, einer Epoxidgruppe oder Diphenylketongruppe. Von den ausgeführten Resten ist der N-Aminoethyl-3-aminopropyl-Rest ganz besonders bevorzugt.

Besonders geeignet für die Verwendung als erfindungsgemäßer Stabilisator hat sich das Reaktionsprodukt aus Hexaphenylcyclotrisiloxan, (Tridecafluoro-1,1,2,2-tetrahydrooctyl)methylcyclotrisiloxan und N-(2-Aminoethyl)-3-aminopropylmethyldimethoxysilan oder das Reaktionsprodukt aus Octamethylcyclotetrasiloxan und (3,3,3-Trifluor-propyl)methylcyclo-trisiloxan mit N-(β-Amino-ethyl)γ-aminopropyl-methyldimethoxysilan erwiesen.

Vorzugsweise betragen die durchschnittlichen Molekulargewichte der organofunktionellen Siloxane der Formel I mindestens 1400 g/mol.

Bevorzugt weist die elektrisch nicht leitende Trägerflüssigkeit eine Viskosität zwischen 0,1 mPas und 1000 mPas, bevorzugt zwischen 1 mPas und 100 mPas auf.

Insbesondere ist es dabei vorteilhaft, wenn die dispergierte Phase aus Polymerpartikeln und/oder Polymertröpfchen gebildet ist. Unter Polymeren werden erfindungsgemäß ebenso Co- und/oder Terpolymere verstanden. Jedoch ist es auch möglich, andere Partikel bzw. Tröpfchen als Polymerpartikel und/oder -tröpfchen einzusetzen. Beispielsweise kommen hierzu Materialien, wie Metalle, Keramiken, oder Partikel aus Eisen, Cobalt oder Nickel in Frage. Durch den Stabilisator wird ebenso erreicht, dass auch mit derartigen Partikeln eine sedimentationsstabile und leicht wieder zu dispergierende Dispersion ermöglicht wird.

Weiterhin erweist es sich als nützlich, wenn dabei als Polymer mindestens eine Verbindung eingesetzt wird, die mindestens eine Hydroxy-, Amino-, (Meth)-acrylat-, Methacrylamid- und/oder Vinylgruppe aufweist.

Ganz besonders sind als Präpolymer- und/oder Polymerpartikel Polyurethanpartikel zu bevorzugen.

Die Partikelgröße der Polymerpartikel liegt in einem Bereich von 0,1 bis 30 μm, bevorzugt in einem Bereich von 0,5 bis 25 μm, ganz besonders bevorzugt in einem Bereich von 1 bis 20 μm.

Ebenso kann als Trägerflüssigkeit für die elektrorheologische Flüssigkeit jede beliebige nichtleitende Flüssigkeit eingesetzt werden. Je nach Verwendungszweck der ERF kann die Trägerflüssigkeit nach ihrer Basisviskosität ausgewählt werden. Denkbar sind somit z. B. Siliconöle (z.B. Polydimethylsiloxane oder Polyphenylmethylsiloxane), Mineralöle, Kohlenwasserstoffe (z.B. Paraffin, Dekan oder Dodekan) und/oder organische Ester (z.B. Dibutylsebacat) aber auch Mischungen hieraus.

Die einsetzbare elektrisch polarisierende und/oder magnetisierbare Komponente kann prinzipiell jede bekannte, für elektrorheologische und/oder magnetorheologische Flüssigkeiten einsetzbare Verbindung, aber auch eine Mischung hieraus sein. So finden z. B. organische, anorganische Halbleiter und/oder Ionenleiter Verwendung. Diese Variante ermöglicht sedimentationsstabile ERF.

Der Gehalt der mindestens einen Sorte elektrisch polarisierender und/oder magnetisierbarer Komponenten bezüglich des Gesamtgewichtes der dispergierten Phase kann dabei über einen weiten Bereich variieren, je nachdem,

welche Eigenschaften der ERF oder MRF gewünscht werden. Somit ist die gezielte Einstellung von Eigenschaften gegeben.

Bevorzugt liegt der Gehalt der dispergierte Phase zwischen 1 bis 80 Vol.-%, bevorzugt zwischen 10 und 50 Vol.-% bezogen auf die gesamte Dispersion.

Der Anteil der mindestens einen Trägerflüssigkeit beträgt bezüglich der gesamten Dispersion vorteilhaft zwischen 99 und 20 Vol.-%, bevorzugt zwischen 90 und 50 Vol.-%, besonders bevorzugt zwischen 75 und 50 Vol.-%.

Der Gewichtsanteil des mindestens einen Stabilisators beträgt bezüglich der dispergierten Phase vorteilhafterweise zwischen 0,01 und 10 Gew.-%, bevorzugt zwischen 0,1 und 5 Gew.-%, besonders bevorzugt zwischen 0,2 und 3 Gew.-%.

Ebenso können Additive in den erfindungsgemäßen Dispersionen enthalten sein. Diese Additive können funktional sein und ein breites Anwendungsgebiet der Dispersionen eröffnen. Beispielsweise können Additive ausgewählt aus der Gruppe bestehend aus Metallsalzen; Weichmachern; Antioxidationsmitteln; Pigmenten; Partikel aus Keramik, Metallen oder Legierungen, Metalloxiden, Thixotropiermitteln, wie z.B. pyrogene Kieselsäuren und/oder Mischungen hieraus, enthalten sein. Der bevorzugte Gehalt kann dabei über einen weiten Bereich variieren, je nachdem welche Eigenschaften gewünscht werden.

Insbesondere ist die Dispersion eine Suspension und/oder Emulsion, ganz besonders eine elektrorheologische und/oder magnetorheologische Flüssigkeit.

Erfindungsgemäß wird ebenso ein Verfahren zur Herstellung einer Dispersion bereitgestellt, bei dem

a) mindestens ein flüssiges Präpolymer und/oder Polymer in mindestens einer Trägerflüssigkeit dispergiert und/oder
b) mindestens eine Sorte Partikel in mindestens einer Trägerflüssigkeit dispergiert und
c) mindestens ein Stabilisator zugesetzt wird.

Die Zugabe des Stabilisators kann dabei gleichzeitig und/oder anschließend zu den Schritten a) und b) erfolgen, jedoch ist auch möglich dass der Stabilisator vorgelegt wird.

Die Dispergierung des flüssigen Polymers und/oder Präpolymers kann beispielsweise durch starkes Rühren o.ä. mechanische Beaufschlagung erfolgen, wobei sich feine Tröpfchen bilden. Alternativ dazu kann die Partikelbildung schon vorher erfolgen, so dass bereits fertige Partikel in der flüssigen Phase verteilt werden. Die Partikel können dabei flüssig und/oder fest sein.

Bevorzugt wird die Dispergierung bei einem Druck zwischen 1 und 100 bar, bevorzugt zwischen 5 und 80 bar, besonders bevorzugt zwischen 10 und 70 bar durchgeführt.

Ebenso ist es von Vorteil, wenn die Dispergierung bei einer Temperatur zwischen 10 und 200 °C, bevorzugt zwischen 20 und 100 °C, besonders bevorzugt zwischen 30 und 75 °C durchgeführt wird.

Die Homogenisierung erfolgt dabei über einen bevorzugten Zeitraum zwischen 1 min und 12 Std., bevorzugt zwischen 1 Std. und 5 Std.

Zur Herstellung insbesondere von ERF auf Basis von Polymeren und/oder Präpolymeren ist es dabei erforderlich, dass vor der Dispergierung in das mindestens eine Präpolymer mindestens eine Sorte elektrisch polarisierender Komponenten eingemischt wird.

Um ausgehärtete Polymerpartikel zu erhalten, wird das Präpolymer, insbesondere ein Polyurethan-Präpolymer bevorzugt durch Zugabe mindestens eines Härters zum korrespondierenden Polymer ausgehärtet. Insbesondere finden dabei TDI (Toluoldiisocyanat), MDI (Methylendiisocyanat) und/oder HDI (Hexamethylendiisocyanat) Verwendung. Der mindestens eine Härter kann dabei bezüglich des verwendeten Päpolymers stöchiometrisch, aber auch unter- oder überstöchiometrisch eingesetzt werden.

Verwendung finden die erfindungsgemäß darstellbaren elektro- und/oder magnetorheologischen Flüssigkeiten in adaptiven Stoß- und Schwingungsdämpfern, steuerbaren Bremsen, Kupplungen sowie in Sport- oder Trainingsgeräten.

Des Weiteren können die erfindungsgemäß darstellbaren elektro- und/oder magnetorheologischen Flüssigkeiten zur Erzeugung und/oder Darstellung haptischer Informationen wie Kräfte, Drehmomente, Schriftzeichen, computersimulierte Objekte, Sensorsignale oder Bilder verwendet werden.

Letztlich können die erfindungsgemäß darstellbaren elektro- und/oder magnetorheologischen Flüssigkeiten zur Simulation viskoser, elastischer und/oder visko-elastischer Eigenschaften bzw. der Konsistenzverteilung eines Objektes, insbesondere zu Trainings- und/oder Forschungszwecken und/oder für medizinische Anwendungen verwendet werden.

Die Erfindung wird anhand des nachstehenden Beispiels näher erläutert, ohne die Erfindung auf die genannten Stoffe oder Parameter zu beschränken.

Beispiel

In einem Kolben wurden jeweils 40 g eines trifunktionellen Polyethylenglycols unter Zugabe einer Mischung, bestehend aus 50 g Siliconöl (Polydimethylsiloxan mit einer Viskosität bei 25 °C von 5 $mm^2/s$ und einer Dichte bei 25 °C von 0,93 $g/cm^3$) und 1 g des Stabilisators (Umsetzungsprodukt aus 73 Teilen Hexaphenylcyclotrisiloxan, 2 Teilen (Tridecafluoro-1,1,2,2-tetrahydrooctyl)methylcyclotrisiloxan und 1 Teil N-(2-Aminoethyl)-3-aminopropylmethyldimethoxysilan), mit einem Rührer homogenisiert. Anschließend wurden zur Emulsion 12 g Toluendiisocyanat dosiert.

Beim Vergleich der Sedimentations- und Redispergiereigenschaften einer so hergestellten Dispersion mit einer analog hergestellten Dispersion mit einem Stabilisator ohne fluorierte Seitengruppen sedimentierte diese Dispersion weniger. Es bildete sich ein weicher und hoher Bodensatz im Gegensatz zur Vergleichsdispersion. deren Bodensatz fest und dicht war. Außerdem konnte diese Dispersion durch leichtes Schütteln wieder vollständig homogenisiert werden. Der Bodensatz der Vergleichsdispersion ließ sich hingegen nur durch sehr intensives und lang andauerndes Schütteln redispergieren.

**Patentansprüche**

1. Sedimentationsstabile Dispersion, enthaltend

   a) mindestens Trägerflüssigkeit,
   b) mindestens eine Sorte darin dispergierte Partikel und/oder Tröpfchen, die die dispergierte Phase bilden, sowie
   c) mindestens einen Reaktivstabilisator, **dadurch gekennzeichnet, dass** der mindestens eine Stabilisator zumindest teilweise fluoriert ist.

2. Dispersion nach vorhergehendem Anspruch, **dadurch gekennzeichnet, dass** der Reaktivstabilisator mindestens eine funktionelle Gruppe aufweist, die eine chemische Verknüpfung mit einem Präpolymer und/oder Polymer ermöglicht, insbesondere eine Amino-, Alkohol, Carbonyl-, Aldehyd-, Hlbacetal-, Acetal-, Epoxid-, Carbonsäure-, Carbonsäurechlorid-, Carbonsäureanhydrid-, Carbonsäureamid-, Imidazolyl-, Vinyl-, Ethinyl-, Halogen- , $\alpha,\beta$-ungesättigte Keto-, (Meth)Acryl- und/oder Thiolgruppe oder davon abgeleitete Gruppen.

3. Dispersion nach einem der vorhergehenden Ansprüche, **dadurch gekennzeichnet, dass** der mindestens eine Reaktivstabilisator ein zumindest teilweise fluoriertes organofunktionelles Siloxan der allgemeinen Formel I ist,

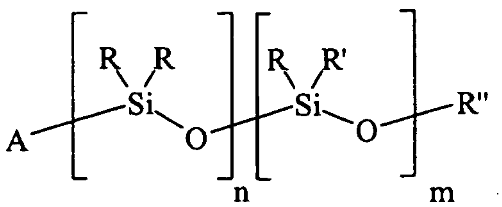

Formel I

mit n und m unabhängig voneinander von 0 bis 77,
R = $C_1$-$C_{18}$-Alkyl und/oder Phenyl, vorzugsweise Methyl,
R' = $(CH_2)_o$-$C_pF_{2p+1}$ mit o = 2-18 und p = 1-10,
R" = $C_1$-$C_{18}$-Alkyl und/oder Phenyl und/oder H,
A = gleiche oder verschiedene SiC-gebundene Reste ausgewählt aus der Gruppe bestehend aus

$-CH_2CH_2NH_2$

$-CH_2CH_2CH_2NH_2$

$-(CH_2)_5NH_2$

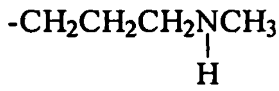

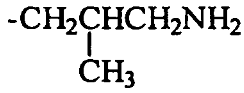

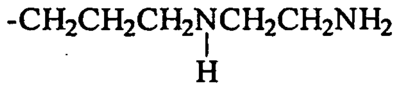

$-(CH_2)_3(NHCH_2CH_2)_2NH_2$

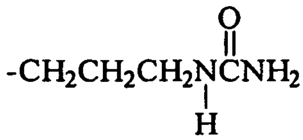

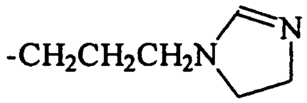

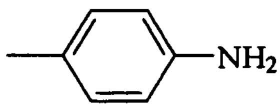

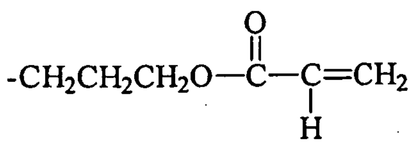

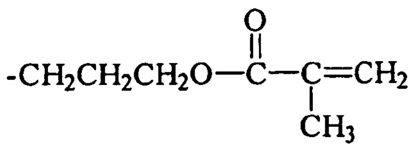

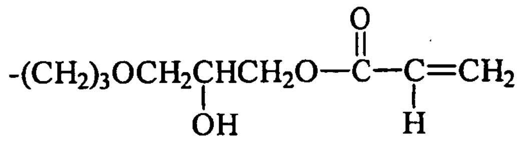

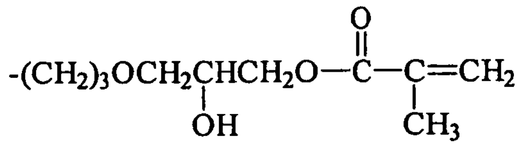

$-CH=CH_2$

$-CH_2CH_2SH$

und/oder Resten mit einer terminalen OH-Gruppe, einer Vinyl- oder Ethinyl-Gruppe, einer Halogen-Gruppe, einer Aldehyd-, Halbacetal- oder Acetal-Gruppe, einer Epoxidgruppe oder Diphenylketongruppe ist.

4. Dispersion nach einem der vorhergehenden Ansprüche, **dadurch gekennzeichnet, dass** der mindestens eine Reaktivstabilisator das Reaktionsprodukt aus Hexaphenylcyclotrisiloxan, (Tridecafluoro-1,1,2,2-tetrahydrooctyl)methylcyclotrisiloxan und N-(2-Aminoethyl)-3-aminopropylmethyldimethoxysilan oder das Reaktionsprodukt aus Octamethylcyclotetrasiloxan und (3,3,3-Trifluor-propyl)methylcyclo-trisiloxan mit N-(β-Aminoethyl)γ-aminopropyl-methyldimethoxysilan ist, und bevorzugt ein durchschnittliches Molekulargewicht von mindestens 1400 g/mol aufweist.

5. Dispersion nach einem der vorhergehenden Ansprüche, **dadurch gekennzeichnet, dass** die Trägerflüssigkeit eine elektrisch nicht leitende Flüssigkeit ist und bevorzugt ausgewählt ist aus der Gruppe bestehend aus Siliconölen (z.B. Polydimethylsiloxane oder Polyphenylmethylsiloxane), Mineralölen, Kohlenwasserstoffen (z.B. Paraffin, Dekan oder Dodekan), organischen Estern (z.B. Dibutylsebacat) und/oder Mischungen daraus, und besonders bevorzugt eine Viskosität zwischen 0,1 mPas und 1000 mPas, bevorzugt zwischen 1 mPas und 100 mPas, aufweist.

6. Dispersion nach einem der vorhergehenden Ansprüche, **dadurch gekennzeichnet, dass** die dispergierte Phase aus Polymerpartikeln und/oder Polymertröpfchen gebildet ist, wobei bevorzugt die Polymere mindestens eine Hydroxy-, Amino-, (Meth)acrylat-, Methacrylamid- und/oder Vinylgruppe aufweisen, insbesondere Polyurethane sind und weiter bevorzugt die mindestens eine Sorte dispergierter Partikel eine mittlere Partikelgröße zwischen 0,1 und 30 μm, bevorzugt zwischen 0,5 und 25 μm, besonders bevorzugt zwischen 1 und 20 μm aufweist.

7. Dispersion nach einem der vorhergehenden Ansprüche, **dadurch gekennzeichnet, dass** in der mindestens einer Sorte dispergierter Partikel mindestens eine Sorte elektrisch polarisierender und/oder magnetisierbarer Komponenten enthalten ist, wobei bevorzugt die mindestens eine Sorte elektrisch polarisierender Komponenten ausgewählt ist aus der Gruppe bestehend aus organischen Halbleitern, anorganischen Halbleitern und/oder Ionenleitern und/oder die mindestens eine Sorte magnetisierbarer Komponenten ausgewählt ist aus der Gruppe bestehend aus Fe, Co, Ni und/oder Legierungen hieraus und besonders bevorzugt die dispergierte Phase zwischen 1 bis 80 Vol.-%, bevorzugt zwischen 10 und 50 Vol.-% der gesamten Dispersion ausmacht.

8. Dispersion nach einem der vorhergehenden Ansprüche, **dadurch gekennzeichnet, dass** der Anteil der mindestens einen Trägerflüssigkeit bezüglich der gesamten Dispersion zwischen 99 und 20 Vol.-%, bevorzugt zwischen 90 und 50 Vol.-%, besonders bevorzugt zwischen 75 und 50 Vol.-% beträgt und bevorzugt der Gewichtsanteil des mindestens einen Reaktivstabilisators bezüglich der dispergierten Phase zwischen 0,01 und 10 Gew.-%, bevorzugt zwischen 0,1 und 5 Gew.-%, besonders bevorzugt zwischen 0,2 und 3 Gew.-% beträgt.

9. Dispersion nach einem der vorhergehenden Ansprüche, **dadurch gekennzeichnet, dass** mindestens ein weiteres Additiv, ausgewählt aus der Gruppe bestehend aus Metallsalzen; Weichmachern; Antioxidationsmitteln; Pigmenten; Partikel aus Keramik, Metallen oder Legierungen, Metalloxiden, Thixotropiermitteln, z.B. pyrogene Kieselsäuren und/oder Mischungen hieraus, enthalten ist.

**10.** Dispersion nach einem der vorhergehenden Ansprüche, **dadurch gekennzeichnet, dass** die Dispersion eine Suspension und/oder Emulsion ist.

**11.** Dispersion nach einem der vorhergehenden Ansprüche, **dadurch gekennzeichnet, dass** sie eine elektrorheologische und/oder magnetorheologische Flüssigkeit ist.

**12.** Verfahren zur Herstellung einer Dispersion nach einem der vorhergehenden Ansprüche, **dadurch gekennzeichnet, dass**

a) mindestens ein flüssiges Präpolymer und/oder Polymer in mindestens einer Trägerflüssigkeit dispergiert und/oder
b) mindestens eine Sorte Partikel in mindestens einer Trägerflüssigkeit dispergiert und
c) mindestens ein Reaktivstabilisator zugesetzt wird.

**13.** Verfahren nach Anspruch 12, **dadurch gekennzeichnet, dass** vor Dispergierung in das mindestens eine Präpolymer mindestens eine Sorte elektrisch polarisierender Komponenten eingemischt wird, und bevorzugt das Präpolymer nach Dispergierung durch Zugabe mindestens eines Härters zum korrespondierenden Polymer ausgehärtet wird und weiter bevorzugt der Härter ausgewählt ist aus der Gruppe bestehend aus TDI (Toluoldiisocyanat), MDI (Methylendiisocyanat) und/oder HDI (Hexamethylendiisocyanat).

**14.** Verwendung einer Dispersion nach einem der Ansprüche 1 bis 11 in adaptiven Stoß- und Schwingungsdämpfern, steuerbaren Bremsen, Kupplungen sowie in Sport- oder Trainingsgeräten.

**15.** Verwendung einer Dispersion nach einem der Ansprüche 1 bis 11 zur Erzeugung und/oder Darstellung haptischer Informationen wie Kräfte, Drehmomente, Schriftzeichen, computersimulierte Objekte, Sensorsignale oder Bilder.

**16.** Verwendung einer Dispersion nach einem der Ansprüche 1 bis 11 zur Simulation viskoser, elastischer und/oder visko-elastischer Eigenschaften bzw. der Konsistenzverteilung eines Objektes, insbesondere zu Trainings- und/oder Forschungszwecken und/oder für medizinische Anwendungen.

**17.** Verwendung einer Dispersion nach einem der Ansprüche 1 bis 11 als elektrorheologische und/oder magnetorheologische Flüssigkeit.

## Claims

**1.** Stable sediment dispersion, containing

a) at least one carrier fluid,
b) at least one sort of particles and/or droplets dispersed therein which form the dispersed phase, and also
c) at least one reactive stabiliser,

**characterised in that** the at least one stabiliser is at least partially fluorinated.

**2.** Dispersion according to the preceding claim, **characterised in that** the reactive stabiliser has at least one functional group which enables chemical crosslinking with a prepolymer and/or polymer, in particular an amino, alcohol, carbonyl, aldehyde, hemiacetal, acetal, epoxide, carboxylic acid, carboxylic acid chloride, carboxylic acid anhydride, carboxylic acid amide, imidazolyl, vinyl, ethinyl, halogen, $\alpha,\beta$-unsaturated keto, (meth)acryl and/or thiol group or groups derived therefrom.

**3.** Dispersion according to one of the preceding claims, **characterised in that** the at least one reactive stabiliser is an at least partially fluorinated organofunctional siloxane of the general formula I,

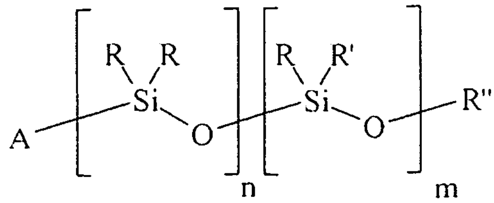

Formula I

with n and m independently of each other from 0 to 77,
R = $C_1$-$C_{18}$ alkyl and/or phenyl, preferably methyl,
R' = $(CH_2)_o$-$C_pF_{2p+1}$ with o = 2-18 and p = 1-10,
R" $C_1$-$C_{18}$ alkyl and/or phenyl and/or H,
A = the same or different SiC-bonded radicals selected from the group comprising

$-CH_2CH_2NH_2$

$-CH_2CH_2CH_2NH_2$

$-(CH_2)_5NH_2$

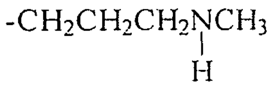

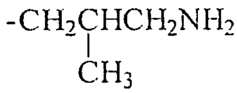

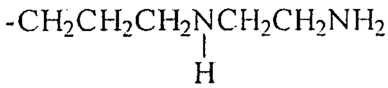

$-(CH_2)_3(NHCH_2CH_2)_2NH_2$

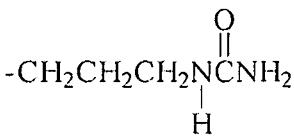

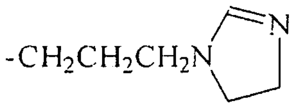

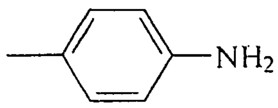

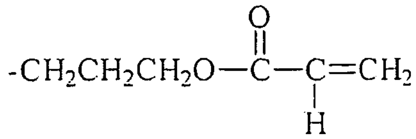

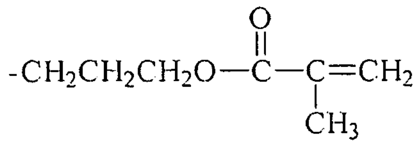

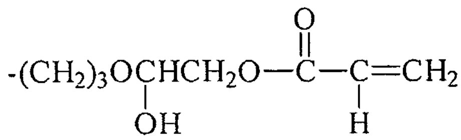

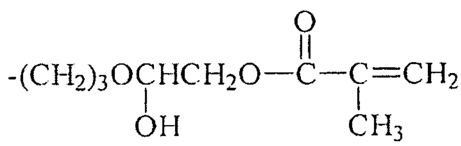

$-CH=CH_2$

$-CH_2CH_2SH$

and/or radicals with a terminal OH group, a vinyl or ethinyl group, a halogen group, an aldehyde, hemiacetal or acetal group, an epoxide group or diphenyl ketone group.

**4.** Dispersion according to one of the preceding claims, **characterised in that** the at least one reactive stabiliser is the reaction product of hexaphenylcyclotrisiloxane, (tridecafluoro-1,1,2,2-tetrahydrooctyl)methylcyclotrisiloxane and N-(2-aminoethyl)-3-aminopropylmethyldimethoxysilane or the reaction product of octamethylcyclotetrasiloxane and (3,3,3-trifluoropropyl)methylcyclotrisiloxane with N-(β-aminoethyl)γ-aminopropylmethyldimethoxysilane and preferably the at least one reactive stabiliser has an average molecular weight of at least 1,400 g/mol.

**5.** Dispersion according to one of the preceding claims, **characterised in that** the carrier fluid is an electrically nonconductive fluid and preferably selected from the group comprising silicone oils (e.g. polydimethylsiloxanes or polyphenylmethylsiloxanes), mineral oils, hydrocarbons (e.g. paraffin, decane or dodecane), organic esters (e.g. dibutyl sebacate) and/or mixtures thereof and that the carrier fluid particularly preferably has a viscosity between 0.1 mPas and 1,000 mPas, preferably between 1 mPas and 100 mPas.

**6.** Dispersion according to one of the preceding claims, **characterised in that** the dispersed phase is formed from polymer particles and/or polymer droplets, wherein preferably the polymers have at least one hydroxy, amino, (meth) acrylate, methacrylamide and/or vinyl group, in particular are polyurethanes and further preferably the at least one sort of dispersed particles has an average particle size between 0.1 and 30 μm, preferably between 0.5 and 25 μm, particularly preferred between 1 and 20 μm.

**7.** Dispersion according to one of the preceding claims, **characterised in that**, in the at least one sort of dispersed particles, at least one sort of electrically polarising and/or magnetisable components is contained, wherein preferably the at least one sort of electrically polarising components is selected from the group comprising organic semiconductors, inorganic semiconductors and/or ion conductors, and/or the at least one sort of magnetisable components is selected from the group comprising Fe, Co, Ni and/or alloys hereof and particularly preferably the dispersed phase makes up between 1 to 80% by volume, preferably between 10 and 50% by volume, of the total dispersion.

**8.** Dispersion according to one of the preceding claims, **characterised in that** the proportion of the at least one carrier fluid relative to the total dispersion is between 99 and 20% by volume, preferably between 90 and 50% by volume, particularly preferred between 75 and 50% by volume and preferably the weight proportion of the at least one reactive stabiliser relative to the dispersed phase is between 0.01 and 10% by weight, preferably between 0.1 and 5% by weight, particularly preferred between 0.2 and 3% by weight.

**9.** Dispersion according to one of the preceding claims, **characterised in that** at least one further additive is contained, selected from the group comprising metal salts; plasticisers; antioxidants; pigments; particles made of ceramic, metals or alloys, metal oxides, thixotropic agents, e.g. pyrogenic silicic acids and/or mixtures hereof.

**10.** Dispersion according to one of the preceding claims, **characterised in that** the dispersion is a suspension and/or emulsion.

**11.** Dispersion according to one of the preceding claims, **characterised in that** it is an electrorheological and/or magnetorheological fluid.

**12.** Method for producing a dispersion according to one of the preceding claims, **characterised in that**

a) at least one fluid prepolymer and/or polymer is dispersed in at least one carrier fluid and/or
b) at least one sort of particles is dispersed in at least one carrier fluid and
c) at least one reactive stabiliser is added.

**13.** Method according to claim 12, **characterised in that**, before dispersion into the at least one prepolymer, at least one sort of electrically polarising components is mixed in and preferably the prepolymer is hardened after dispersion by addition of at least one hardener to form the corresponding polymer and further preferably the hardener is selected from the group comprising TDI (toluene diisocyanate), MDI (methylene diisocyanate) and/or HDI (hexamethylene diisocyanate).

**14.** Use of a dispersion according to one of the claims 1 to 11 in adaptive shock and oscillation dampers, controllable brakes, couplings and also in sports or training apparatus.

**15.** Use of a dispersion according to one of the claims 1 to 11 in order to produce and/or display haptic information, such as forces, torques, characters, computer-simulated objects, sensor signals or pictures.

**16.** Use of a dispersion according to one of the claims 1 to 11 for the simulation of viscous, elastic and/or viscoelastic properties respectively consistency distribution of an object, in particular for training and/or research purposes and/or for medical applications.

**17.** Use of a dispersion according to one of the claims 1 to 11 as electrorheological and/or magnetorheological fluid.

## Revendications

**1.** Dispersion stable par rapport à la sédimentation, contenant :

a) au moins un liquide véhiculaire,
b) au moins une sorte de particules et/ou de gouttelettes dispersées dans celui-ci et formant la phase dispersée, et
c) au moins un stabilisateur réactif, **caractérisée en ce que** le au moins un stabilisateur est au moins partiellement fluoré.

**2.** Dispersion selon la revendication précédente, **caractérisée en ce que** le stabilisateur réactif présente au moins

un groupement fonctionnel qui permet l'établissement d'une liaison chimique avec un prépolymère et/ou un polymère, en particulier un groupement amino, alcool, carbonyle, aldéhyde, semi-acétal, acétal, époxyde, acide carboxylique, chlorure d'acide carboxylique, anhydride d'acide carboxylique, amide d'acide carboxylique, imidazolyle, vinyle, éthynyle, halogène, céto à insaturation $\alpha,\beta$, (méth) acryle et/ou thiol ou des groupements dérivés de ceux-ci.

**3.** Dispersion selon l'une quelconque des revendications précédentes, **caractérisée en ce que** le au moins un stabilisateur réactif est un siloxane organofonctionnel au moins partiellement fluoré de formule générale I suivante :

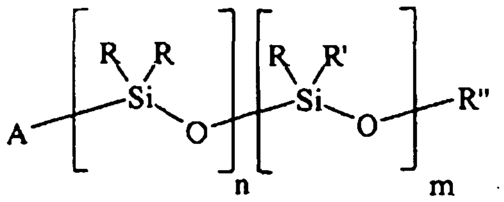

Formule I

dans laquelle n et m valent, indépendamment l'un de l'autre, 0 à 77,
R est un alkyle en $C_1$-$C_{18}$ et/ou un phényle, de préférence un méthyle,
R' représente $(CH_2)_o$-$CpF_{2p+1}$ avec o = 2 à 18 et p = 1 à 10,
R" est un alkyle en $C_1$-$C_{18}$ et/ou un phényle et/ou H,
A représente des radicaux identiques ou différents à liaison SiC, choisis dans le groupe constitué des composés suivants :

$-CH_2CH_2NH_2$

$-CH_2CH_2CH_2NH_2$

$-(CH_2)_5NH_2$

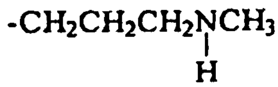

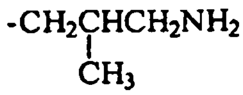

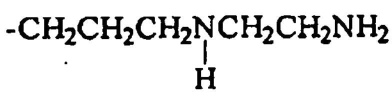

$-(CH_2)_3(NHCH_2CH_2)_2NH_2$

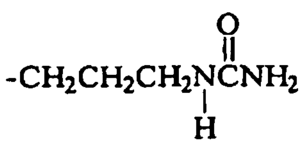

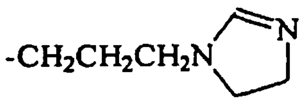

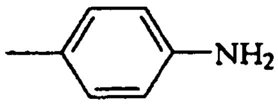

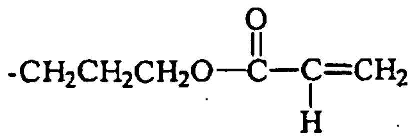

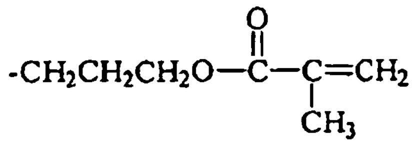

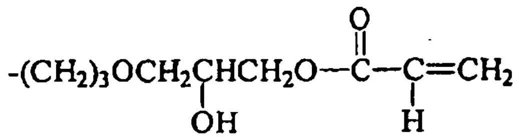

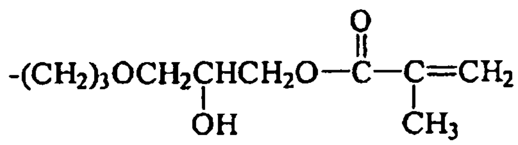

$-CH=CH_2$

$-CH_2CH_2SH$

et/ou des radicaux contenant un groupement OH terminal, un groupement vinyle ou éthynyle, un halogène, un groupement aldéhyde, semi-acétal ou acétal, un groupement époxyde ou diphénylcétone.

4. Dispersion selon l'une quelconque des revendications précédentes, **caractérisée en ce que** le au moins un stabilisateur réactif est le produit réactionnel obtenu à partir de l'hexaphénylcyclotrisiloxane, du (tridécafluoro-1,1,2,2-tétrahydrooctyl)méthylcyclo-trisiloxane et du N-(2-aminoéthyl)-3-aminopropylméthyl-diméthoxysilane ou le produit réactionnel obtenu à partir de l'octaméthylcyclotétrasiloxane et du (3,3,3-trifluoropropyl)méthylcyclotrisiloxane avec le N-(β-aminoéthyl)γ-aminopropyl-méthyldiméthoxysilane et présente, de préférence, un poids moléculaire moyen d'au moins 1400 g/mole.

5. Dispersion selon l'une quelconque des revendications précédentes, **caractérisée en ce que** le liquide véhiculaire est un liquide non électroconducteur et est choisi, de préférence, dans le groupe comprenant les huiles de silicone (par exemple des polydiméthylsiloxanes ou des polyphénylméthylsiloxanes), les huiles minérales, les hydrocarbures (par exemple, la paraffine, le décane ou le dodécane), les esters organiques (par exemple, le sébacate de dibutyle)

et/ou leurs mélanges et présente de manière particulièrement préférée une viscosité comprise entre 0,1 mPas et 1000 mPas, de préférence entre 1 mPas et 100 mPas.

**6.** Dispersion selon l'une quelconque des revendications précédentes, **caractérisée en ce que** la phase dispersée est formée de particules polymères et/ou de gouttelettes polymères, dans laquelle les polymères présentent, de préférence, au moins un groupement hydroxyle, amino, (méth)acrylate, méthacrylamide et/ou vinyle, ces polymères étant en particulier des polyuréthannes et, en outre, la au moins une sorte de particules dispersées présente, de préférence, une taille particulaire moyenne comprise entre 0,1 et 30 μm, de préférence, entre 0,5 et 25 μm, mieux encore, entre 1 et 20 μm.

**7.** Dispersion selon l'une quelconque des revendications précédentes, **caractérisée en ce que** la au moins une sorte de particules dispersées contient au moins une sorte de composants à effet polarisant électriquement et/ou magnétisables, dans laquelle la au moins une sorte de composants à effet polarisant électriquement est choisie, de préférence, dans le groupe constitué des semi-conducteurs organiques, des semi-conducteurs inorganiques et/ou des conducteurs ioniques et/ou la au moins une sorte de composants magnétisables est choisie dans le groupe constitué des éléments Fe, Co, Ni et/ou de leurs alliages et, mieux encore, la phase dispersée constitue entre 1 et 80 % en volume, de préférence entre 10 et 50 % en volume de la dispersion totale.

**8.** Dispersion selon l'une quelconque des revendications précédentes, **caractérisée en ce que** la proportion du au moins un liquide véhiculaire se situe, par rapport à la dispersion totale, entre 99 et 20 % en volume, de préférence, entre 90 et 50 % en volume, mieux encore, entre 75 et 50 % en volume et, de préférence, **en ce que** la proportion en poids du au moins un stabilisateur réactif se situe, par rapport à la phase dispersée, entre 0,01 et 10 % en poids, de préférence, entre 0,1 et 5 % en poids, mieux encore, entre 0,2 et 3 % en poids.

**9.** Dispersion selon l'une quelconque des revendications précédentes, **caractérisée en ce qu'**elle contient au moins un autre additif choisi dans le groupe constitué des sels métalliques ; des plastifiants ; des agents antioxydants ; des pigments ; des particules de céramique, des métaux ou d'alliages, des oxydes métalliques, des agents thixotropes, par exemple des acides siliciques pyrogènes et/ou de leurs mélanges.

**10.** Dispersion selon l'une quelconque des revendications précédentes, **caractérisée en ce que** la dispersion est une suspension et/ou une émulsion.

**11.** Dispersion selon l'une quelconque des revendications précédentes, **caractérisée en ce qu'**elle est un fluide électrorhéologique et/ou magnétorhéologique.

**12.** Procédé de fabrication d'une dispersion selon l'une quelconque des revendications précédentes, **caractérisé en ce que**

a) au moins un prépolymère et/ou polymère liquide est dispersé dans au moins un liquide véhiculaire, et/ou
b) au moins une sorte de particules est dispersée dans au moins un liquide véhiculaire, et
c) au moins un stabilisateur réactif est ajouté.

**13.** Procédé selon la revendication 12, **caractérisé en ce que**, avant de procéder à la dispersion, au moins une sorte de composants à effet polarisant électriquement est mélangée dans le au moins un prépolymère et **en ce que**, de préférence, le prépolymère est durci après la dispersion par addition d'au moins un agent durcissant de manière à former le polymère correspondant et, mieux encore, l'agent durcissant est choisi dans le groupe constitué du TDI (diisocyanate de toluène), du MDI (diisocyanate de méthylène) et/ou du HDI (diisocyanate d'hexaméthylène).

**14.** Utilisation d'une dispersion selon l'une quelconque des revendications 1 à 11, dans des amortisseurs de chocs et d'oscillations adaptatifs, des freins pouvant être commandés, des accouplements, ainsi que des appareils de sport ou d'entraînement.

**15.** Utilisation d'une dispersion selon l'une quelconque des revendications 1 à 11 pour générer et/ou représenter des informations haptiques, telles que des forces, des couples de rotation, des caractères, des objets simulés par ordinateur, des signaux de capteur ou des images.

**16.** Utilisation d'une dispersion selon l'une quelconque des revendications 1 à 11, pour la simulation des propriétés visqueuses, élastiques et/ou viscoélastiques ou la distribution de consistance d'un objet, en particulier à des fins

de formation et/ou de recherche et/ou pour des applications médicales.

**17.** Utilisation d'une dispersion selon l'une quelconque des revendications 1 à 11, comme fluide électrorhéologique et/ou magnétorhéologique.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0824128 B1
- EP 0284268 B1
- EP 0523300 B1